(19)

**Europäisches Patentamt**

**European Patent Office**

**Office européen des brevets**

(11) **EP 4 202 217 A1**

(12) **EUROPEAN PATENT APPLICATION**

(43) Date of publication:
**28.06.2023 Bulletin 2023/26**

(21) Application number: **21383201.7**

(22) Date of filing: **23.12.2021**

(51) International Patent Classification (IPC):
*F03D 17/00* *(2016.01)*

(52) Cooperative Patent Classification (CPC):
**F03D 17/00;** F05B 2240/60; F05B 2260/80;
F05B 2270/808; F05B 2270/821

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Siemens Gamesa Renewable Energy
Innovation &
Technology S.L.
31621 Sarriguren (Navarra) (ES)**

(72) Inventor: **The designation of the inventor has not
yet been filed**

(74) Representative: **SGRE-Association
Siemens Gamesa Renewable
Energy GmbH & Co KG
Schlierseestraße 28
81539 München (DE)**

(54) **METHOD OF DETERMINING A TILT AND YAW BENDING MOMENTS AT A WIND TURBINE
SHAFT BY DISTANCE SENSORS**

(57)    It is described a method of determining a tilt bending moment (Mtilt) and a yaw bending moment (Myaw) at a shaft of a wind turbine, wherein the shaft comprises a radially extended surface (13), and at least three distance sensors (12i), at different azimuthal positions ($\psi_i$), arranged to face the flange surface (13) for measuring a distance (di) to the flange surface (13), wherein the method comprises: determining a baseline distance profile for each distance sensor (12i) as a function of the rotor azimuth ($\psi$) by using the distance sensors (12i) when the wind turbine is operated at an idling condition without power production, preferably with blades (6) of the wind turbine (1) being pitched to a feather position; operating the wind turbine and determining a distance between the baseline profile and an actual distance (di) measured by the distance sensor (12i) for a given azimuth ($\Psi$) of the flange surface (13); and determining the tilt bending moment (Mtilt) and the yaw bending moment (Myaw) as function of the determined distance between the baseline profile and the actual distance (di) at the azimuth ($\Psi$) of the flange surface (13).

FIG 4

EP 4 202 217 A1

**Description**

Field of invention

The present invention relates to a method of determining tilt and yaw bending moments at the shaft of a wind turbine.

An estimation of shaft bending moments such as a tilt and yaw bending moment has conventionally been obtained by combining data from blade load measurements. However, such conventional estimation of the shaft bending moments uses blade strain sensors which are difficult to install, calibrate or replace when they fail.

In addition, as the rotor size increases, the information about the tilt and yaw bending moment will be more relevant. The information about the yaw and tilt bending moments allows to know the load state of the wind turbine and can be used for load strategies such as an individual pitch control (IPC). Additionally, if the yaw and tilt bending moment are complemented with an estimation of the mean blade load, the blade loads can be estimated with a reasonable accuracy.

Summary of the Invention

There may be a need for a method of determining tilt and yaw bending moments at the shaft of a wind turbine, which method is simplified and more robust. This need may be met by the subject matters according to the independent claims. The present invention is further developed as set forth in the dependent claims.

According to the invention, a method and a device of determining a tilt bending moment and a yaw bending moment at a shaft of a wind turbine is provided. The shaft comprises a radially extended surface, and at least three distance sensors are arranged at different azimuthal positions to face the flange surface for measuring a distance to the flange surface. The method comprises steps of determining a baseline distance profile for each distance sensor as a function of the rotor azimuth by using the distance sensors when the wind turbine is operated at an idling condition without power production, preferably with blades of the wind turbine being pitched to a feather position; operating the wind turbine and determining a distance between the baseline profile and an actual distance measured by each distance sensor for a given azimuth of the flange surface; and determining the tilt bending moment and the yaw bending moment as function of the determined distance between the baseline profile and the actual distance at the azimuth of the flange surface. The baseline profile can be composed of recorded distances of the distance sensors vis-à-vis a rotor azimuth during a turbine state, in which no power production is carried out, pitch angles are close to a feather position and the rotational speed is significantly lower than rated speed (for example 10-20 % of a rated rotational speed). The baseline profiles can be recorded for each distance sensor.

In an embodiment, the step of determining the tilt bending moment Mtilt and the yaw bending moment Myaw comprises two sub-steps. A first sub-step is solving a system of equations to get an axial distance ux and rotation angles in two different directions Ry and Rz by minimizing the following weighted error function with respect to ux, Ry and Rz at every time step:

$$error = \sum_{i=1}^{n} \left( \frac{-(d_i - d_{bi}(\psi)) - u_x + R_z y_i - R_y z_i}{s_i(\psi)} \right)$$

wherein:

n is the number of distance sensors;
$d_i$ is the distance measured by the distance sensor;
$d_{bi}(\Psi)$ is the baseline profile of the sensor for a specific rotor azimuth $\Psi$;
$u_x$, $R_z$ and $R_y$ are the axial distance and the rotation angles in two different directions; and
$y_i$ and $z_i$ are coordinates of the position of the distance sensor relative to the rotation axis (8);
$s_i(\psi)$ is a baseline standard deviation for a specific rotor azimuth $\Psi$.

A second sub-step is converting the axial distance ux and the rotation angles Ry and Rz to the tilt bending moment Mtilt and the yaw bending moment Myaw by using functions f1 and f2 like
Mtilt = $f_1$(Ry,Rz,ux) and Myaw = $f_2$(Ry,Rz,ux).

For example, the first sub-step can define a sensor angular position and radial distance from the rotation axis / shaft center

$$\boldsymbol{\varphi} = \begin{bmatrix} \varphi_1 & \varphi_2 & \varphi_3 & \varphi_4 \end{bmatrix} \tag{1}$$

$$\boldsymbol{r} = \begin{bmatrix} r_1 & r_2 & r_3 & r_4 \end{bmatrix}^T \tag{2}$$

From the previous definitions, the sensor distances can be expressed as a linear relationship

$$d_i = u_{x0} + R_y z_i - R_z y_i, \tag{3}$$

being $u_{x0}$ a constant, $R_y$ and $R_z$ two rotation angles and $z_i = r_i \cos(\varphi_i)$ and $y_i = -r_i \sin(\varphi_i)$. Finally, the conversion from distances to orientation angles can be done through

$$\begin{bmatrix} u_x \\ R_y \\ R_z \end{bmatrix} = (\boldsymbol{A}^T \boldsymbol{A})^{-1} \boldsymbol{A}^T \begin{bmatrix} d_1 \\ d_2 \\ d_3 \\ d_4 \end{bmatrix} \tag{4}$$

with

$$\boldsymbol{A} = \begin{bmatrix} 1 & r_1 \cos(\varphi_1) & r_1 \sin(\varphi_1) \\ 1 & r_2 \cos(\varphi_2) & r_2 \sin(\varphi_2) \\ 1 & r_3 \cos(\varphi_3) & r_3 \sin(\varphi_3) \\ 1 & r_4 \cos(\varphi_4) & r_4 \sin(\varphi_4) \end{bmatrix}. \tag{5}$$

To be estimated tilt- and yaw-moments can further be put into relation with hub-forces $[F_x, F_y, F_z]$, drive-train-torque $M_x$ and rotorflange orientation $[R_y, R_z]$ by matrix with elements $m_{i,j}$.

$$\begin{bmatrix} M_y \\ M_z \end{bmatrix} = \begin{bmatrix} m_{0,y} & m_{1,y} & m_{2,y} & m_{3,y} & m_{4,y} & m_{5,y} & m_{6,y} \\ m_{0,z} & m_{1,z} & m_{2,z} & m_{3,z} & m_{4,z} & m_{5,z} & m_{6,z} \end{bmatrix} \begin{bmatrix} 1 \\ F_x \\ F_y \\ F_z \\ M_x \\ R_y \\ R_z \end{bmatrix}. \tag{6}$$

In an embodiment, the method further comprises including known values of a rotor thrust Fx, a rotor torque Mx, a lateral rotor force Fy and a vertical rotor forces Fz in refined functions f3 and f4 of f1 and f2, respectively, like

```
Mtilt = f₃(Ry,Rz,ux,Mx,Fx,Fy,Fz),
```

and

```
Myaw = f₄(Ry,Rz,ux,Mx,Fx,Fy,Fz).
```

In an embodiment, functions $f_i$ in the simplest form are a linear combination of input variables, such as

```
f₁ = K₁₀+K₁₁*Ry+K₁₂*Rz+K₁₃*Ux
```

$$f_2 = K_{20}+K_{21}*Ry+K_{22}*Rz+K_{23}*Ux$$

$$f_3 = K_{30}+K_{31}*Ry+K_{32}*Rz+K_{33}*Ux+k_{34}*Mx+K_{35}*Fx+K_{36}*Fy+K_{37}*Fz$$

$$f_4 = K_{40}+K_{41}*Ry+K_{42}*Rz+K_{43}*Ux+k_{44}*Mx+K_{45}*Fx+K_{46}*Fy+K_{47}*Fz$$

wherein $K_{ij}$ are constants. $K_{i0}$ can be related with the rotor weight, rotor overhang or calibration offsets. The rotor overhang can be a distance of a center of gravity of the rotor blades and the hub with respect to a main bearing center.

In an embodiment, the radially extended surface can be constituted by a rotor lock device or any other radially extended surface such as a flange, preferably with continuity along an entire circumference of the rotor shaft.

In an embodiment, a convergence criterion, based on a standard deviation of a mean value of the measured distance for a specific rotor azimuth, is required to decide when the determination of the baseline distance profile is completed.

For example, the estimation of the mean value and its standard deviation of a discrete input signal $x_n$ can be provided by a Welford algorithm in a recursive manner:

$$s_0 = 0; \ \bar{x}_0 = 0 \quad \text{(initial condition)} \qquad (7)$$

$$\bar{x}_n = \frac{(n-1)\,\bar{x}_{n-1} + x_n}{n} = \bar{x}_{n-1} + \frac{x_n - \bar{x}_{n-1}}{n} \qquad (8)$$

$$s_n = s_{n-1} + (x_n - \bar{x}_{n-1})(x_n - \bar{x}_n) \qquad (9)$$

$$s_{\bar{x}_n} = \sqrt{\frac{s_n}{n-1}}. \qquad (10)$$

The measured distance for each sensor can be used as the time-discrete variable $x_n$ in this regard.

The last term $s_{\bar{x}_n}$ is the estimated standard deviation of the mean value and the input value for the convergence check. The convergence criterion is fulfilled, if the variance of the estimated mean value reaches or falls below a certain value (for example 10pm.) In this case it is taken as given that the baselining has reached a high maturity and further changes of the mean value are negligible.

In an embodiment, a procedure to check a layout of the distance sensors, for example sensor azimuth and radial locations, is performed by a comparison of the baseline distance profile of each distance sensor versus a selected baseline distance profile of reference.

In an embodiment, a procedure to correct the input signal for the rotor azimuth by comparing the pattern of the most recent elapsed timeseries of the distance sensor of a given period of time to the pattern of the baseline at the uncorrected rotor azimuth is applied and an increment at which the absolute error to the baseline distances over the angular range of rotor azimuth for the sum of all distance sensors is minimized is superposed to the rotor azimuth signal.

In the present invention, the tilt bending moment and the yaw bending moment are obtained by installing some distance sensors (inductive sensors) at the shaft. The advantages of this measuring are a) Sensors are located within the nacelle at a non-rotating frame, for example attached to the mainframe by supporting brackets. b) Sensors are robust and give accurate measurements, c) sensors are easy to replace in case of sensor fault, d) the sensor costs are low with respect to commonplace blade load sensing solutions in commercial wind turbine design. Any desired number of distance sensors can be used in an easy way. Furthermore, the present invention takes into account complex geometry measurements and can manage missing data due to this complex geometry.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless other notified, in addition to any combination of features belonging to one type of subject matter also any combination between features relating to different subject matters, in particular between features of the apparatus type claims and features of the method type claims is considered as to be disclosed with this application.

Brief Description of the Drawings

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

Fig. 1     shows a wind turbine and the different elements thereof according to an embodiment;

Fig. 2     shows a side view of a shaft of a wind turbine according to an embodiment;

Fig. 3     shows a plan view on a flange surface of a flange from a side of a generator according to an embodiment;

Fig. 4     shows a layout of distance sensors according to an embodiment;

Fig. 5     shows baseline distance profiles according to an embodiment; and

Fig. 6     shows an azimuth correction of the measured distance according to an embodiment.

Detailed Description

The illustrations in the drawings are schematically. It is noted that in different figures, similar or identical elements are provided with the same reference signs.

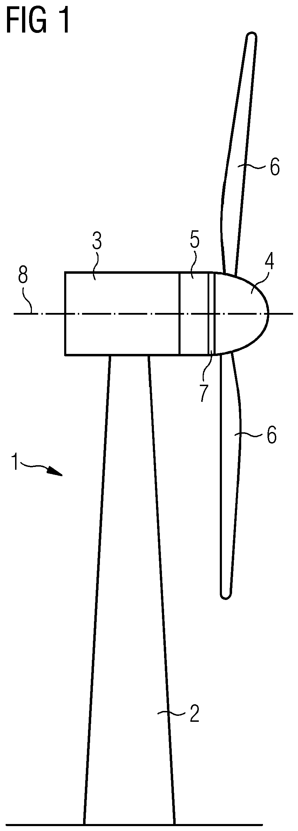

**Fig. 1** shows a wind turbine 1. The wind turbine 1 comprises a nacelle 3 and a tower 2. The nacelle 3 is mounted at the top of the tower 2. The nacelle 3 is mounted rotatable with regard to the tower 2 by means of a yaw bearing. The axis of rotation of the nacelle 3 with regard to the tower 2 is referred to as the yaw axis.

The wind turbine 1 also comprises a hub 4 with a plurality of rotor blades 6 exemplified for 3 blades (of which two rotor blades 6 are depicted in Fig. 1). The hub 4 is mounted rotatable with regard to the nacelle 3 by means of a main bearing 7. The hub 4 is mounted rotatable about a rotor axis of rotation 8.

The wind turbine 1 furthermore comprises a generator 5. The generator 5 in turn comprises a rotor connecting the generator 5 with the hub 4. If the hub 4 is connected directly to the generator 5, the wind turbine 1 is referred to as a gearless, direct-driven wind turbine. Such a generator 5 is referred as direct drive generator 5. As an alternative, the hub 4 may also be connected to the generator 5 via a shaft and a gear box. This type of wind turbine 1 is referred to as a geared wind turbine. The present invention is suitable for both types of wind turbines 1.

The generator 5 is accommodated within the nacelle 3. The generator 5 is arranged and prepared for converting the rotational energy from the hub 4 into electrical energy in the shape of an AC power.

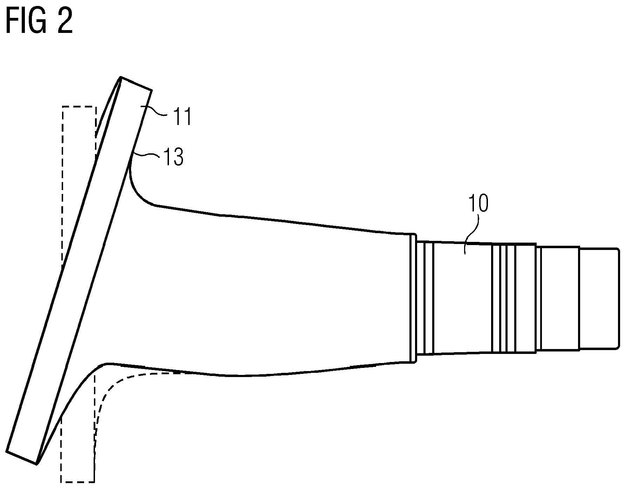

Fig. 2 shows a side view of a shaft 10 of the wind turbine 1 according to an embodiment. The shaft 10 comprises a flange 11 having a radially extended surface 13. The flange 11 having the radially extended surface 13 can be constituted by a hub or rotor lock device or any other radially extended surface, preferably with continuity along an entire circumference of the shaft 10. The hub 4 (i.e., the rotor) is connected to the shaft 10 via the flange 11. As exaggeratedly shown in Fig. 2, the shaft 10 is deformed by a tilt and yaw bending moment which is introduced from the blades 6 via the hub 4 and acts on the shaft 10.

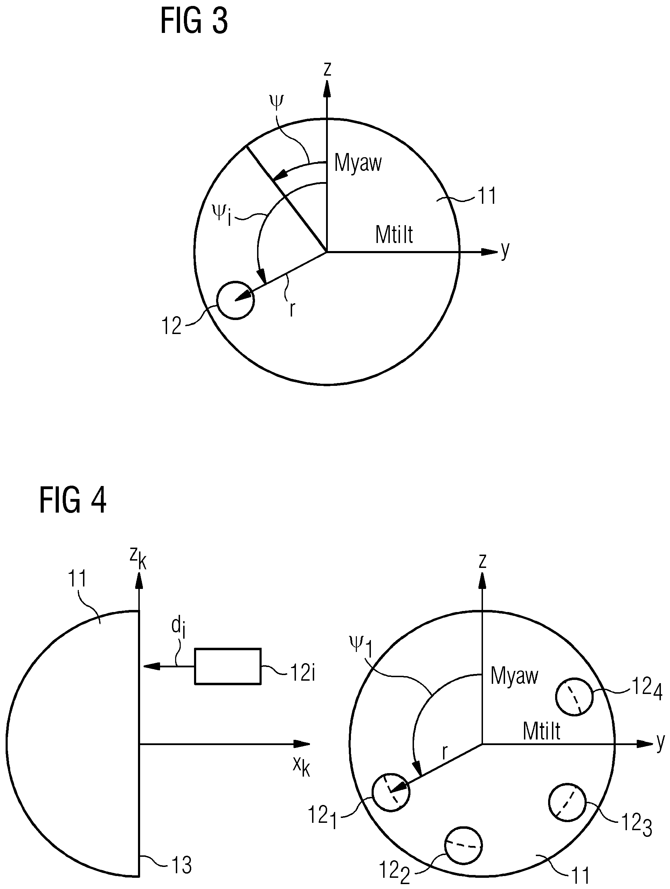

**Fig. 3** shows a plan view on the radially extended surface 13 of the flange 11 from a side of the generator 5 according to an embodiment. A distance sensor 12 is arranged to face the radially extended surface 13 for measuring a distance to the radially extended surface 13.

The distance sensor 12 is arranged at a specific rotor azimuth $\Psi_i$ and a specific radius r. When the flange 11 having the radially extended surface 13 is deformed by the tilt bending moment Mtilt and the yaw bending moment Myaw, as shown in Fig. 2, the distance measured by the distance sensor 12 is also changed. The measured distance allows an estimation of the tilt bending moment Mtilt and the yaw bending moment Myaw. The tilt bending moment Mtilt acts in the y-axis, and the yaw bending moment Myaw acts in the z-axis.

**Fig. 4** shows a layout of the distance sensors $12_i$ according to an embodiment. At least three distance sensors $12_i$, namely $12_1$, $12_2$, $12_3$, $12_4$, are arranged to face the radially extended surface 13 for measuring distances di, namely $d_1$, $d_2$, $d_3$, $d_4$, to the radially extended surface 13. Each distance sensor $12_i$ is arranged at a corresponding azimuthal position $\psi_i$, and a corresponding radius r. The distance sensor $12_i$ are preferably arranged at a non-rotating mainframe of the wind turbine 1. In the present embodiment, all distance sensors 12i are arranged at the same radius r. As a matter of course, the radii can also be different from each other. In the embodiment of Fig. 4, a higher number i than three, namely four, of inductive sensors is provided as distance sensors 12i.

The method of determining the tilt bending moment Mtilt and the yaw bending moment Myaw at the shaft 10 of the wind turbine 1 comprises a step of determining a baseline distance profile 14 for each distance sensor 12i as a function of the rotor azimuth $\Psi$ by using the distance sensors 12i when the wind turbine 1 is operated at an idling condition without power production, preferably with blades 6 of the wind turbine 1 being pitched to a feather position. The feather position can be a pitch position of the rotor blade 6 close to 90° and close to a zero lift. During idling, the rotor blades 6 are (close to) the feather position.

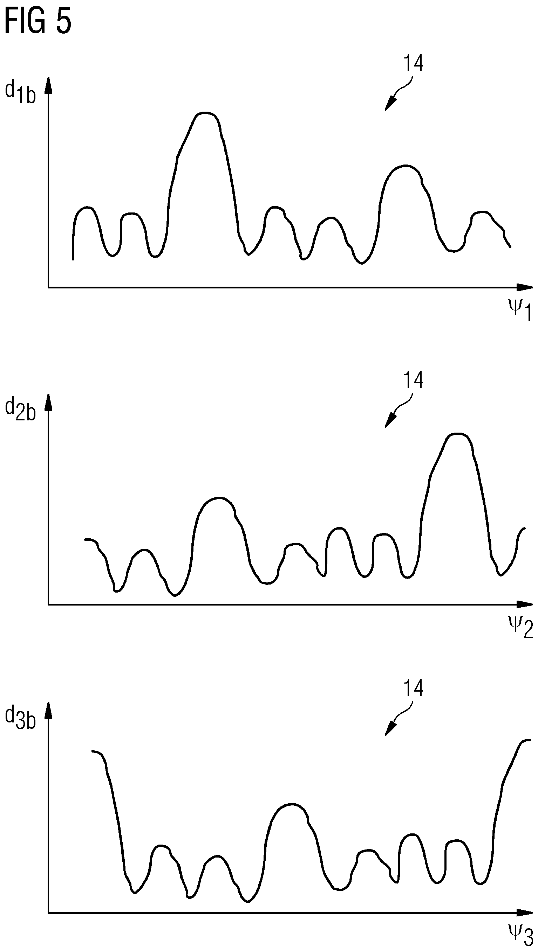

**Fig. 5** shows baseline distance profiles 14 of three distance sensors 12i according to an embodiment. The baseline distance profiles 14 are composed of distances dbi of the corresponding distance sensor 12i, which are measured as a function of the rotor azimuth $\Psi_i$.

When the wind turbine 1 is operated, distances between the baseline profiles 14 and actual distances di measured by the distance sensors 12i for a given azimuth $\Psi$ of the radially extended surface 13 are determined.

Then, the tilt bending moment Mtilt and the yaw bending moment Myaw are determined as function of the determined distances between the baseline profiles 14 and the actual distances di at the azimuth $\Psi$ of the radially extended surface 13.

The step of determining the tilt bending moment Mtilt and the yaw bending moment Myaw can comprises two sub-steps: A first sub-step is solving a system of equations to get an axial distance ux and rotation angles Ry and Rz in two different directions by minimizing the following weighted error function with respect to ux, Ry and Rz at every time step:

$$error = \sum_{i=1}^{n} \left( \frac{-(d_i - d_{bi}(\psi)) - u_x + R_z y_i - R_y z_i}{s_i(\psi)} \right)$$

wherein:

n is the number of the distance sensors 12i;
$d_i$ is the distance measured by the distance sensor 12i;
$d_{bi}(\Psi)$ is the baseline profile 14 of the sensor 12i for a specific rotor azimuth $\Psi$;
$u_x$, $R_z$ and $R_y$ are the axial distance and the rotation angles in two different directions, respectively; and
$y_i$ and $z_i$ are coordinates of the distance sensor 12i; and
$s_i(\psi)$ is a baseline standard deviation for a specific rotor azimuth $\Psi$.

A second sub-step is converting the axial distance ux and the rotation angles Ry and Rz to the tilt bending moment Mtilt and the yaw bending moment Myaw by using functions f1 and f2, being

$$\texttt{Mtilt = f}_1\texttt{(Ry,Rz,ux) and Myaw = f}_2\texttt{(Ry,Rz,ux).}$$

The functions can be refined by including known values of a rotor thrust Fx, a rotor torque Mx, a lateral rotor force Fy and a vertical rotor forces Fz in refined functions f3 and f4 of f1 and f2, respectively, so that

$$\texttt{Mtilt = f}_3\texttt{(Ry,Rz,ux,Mx,Fx,Fy,Fz),}$$

and

$$\texttt{Myaw = f}_4\texttt{(Ry,Rz,ux,Mx,Fx,Fy,Fz).}$$

The functions $f_i$ in the simplest form can be a linear combination of input variables, i.e.:

$$\texttt{f}_1\texttt{ = K}_{10}\texttt{+K}_{11}\texttt{*Ry+K}_{12}\texttt{*Rz+K}_{13}\texttt{*Ux}$$

$$f_2 = K_{20}+K_{21}*Ry+K_{22}*Rz+K_{23}*Ux$$

$$f_3 = K_{30}+K_{31}*Ry+K_{32}*Rz+K_{33}*Ux+k_{34}*Mx+K_{35}*Fx+K_{36}*Fy+K_{37}*Fz$$

$$f_4 = K_{40}+K_{41}*Ry+K_{42}*Rz+K_{43}*Ux+k_{44}*Mx+K_{45}*Fx+K_{46}*Fy+K_{47}*Fz$$

wherein $K_{ij}$ are constants. $K_{i0}$ can be related with the rotor weight, rotor overhang or calibration offsets.

A convergence criterion, based on a standard deviation of a mean value of the measured distance for a specific rotor azimuth $\Psi$, can be required to decide when the determination of the baseline distance profile 14 is completed.

A procedure to check a layout of the distance sensors 12i, for example sensor azimuth and radial locations, can be performed by a comparison of the baseline distance profile 14 of each distance sensor 12i versus a selected baseline distance profile of reference.

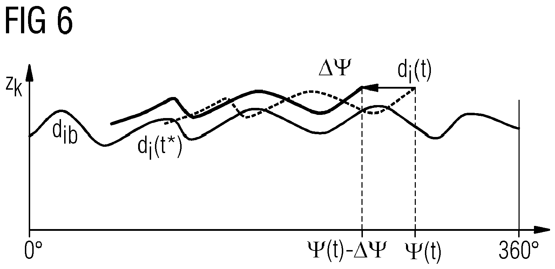

**Fig. 6** shows an azimuth correction of the measured distance according to an embodiment. Fig. 6 shows the baseline distance ***dib***, the original distance measures ***di\**** in the time interval **[*t\**,*t*]** (dashed line) and the azimuthally corrected distance obtained with a constant shift of magnitude $\Delta\psi$ in the azimuth of ***di*** (solid line): the azimuth correction is set constant for all the azimuths and it is equal to the one that minimizes the mean distance, in absolute value, between the measured distance in the interval **[*t\**,*t*]** and the baseline ***dib****;* the areas where the rotor lock plate is discontinuous will be omitted from this calculation. The distance ***di*** is different than ***dib*** due to the tilt and yaw moments. It is usually sufficient for signal synchronization to choose a time t\* so that $|\psi(t) - \psi(t^*)| < 360°$.

If four or more inductive sensors 12i are used, the same calculation can be done for all them and can potentially have four or more different values; however, the final value should be unique. The different measures can be combined in a similar way than the bending moments: the azimuth correction obtained from a case with lower mean value of the distance will be more correct than the one with higher mean distance. The following weighted error formula is used to get a better estimation of the azimuth correction $\Delta\psi$:

$$error = \sum_{i=1}^{4} \left( \frac{\Delta\psi_i - \Delta\psi}{D_i} \right)^2,$$

$$\frac{\partial}{\partial\Delta\psi} error = 0,$$

where ***Di*** is the mean value of the difference between the measured distance and the baseline distance.

That means, a procedure to correct the input signal for the rotor azimuth $\Psi$ by comparing the pattern of the most recent elapsed timeseries of the distance sensor of a given period of time to the pattern of the baseline at the uncorrected rotor azimuth $\Psi$ is applied and an increment $d\Psi$ at which the absolute error to the baseline distances over the angular range of rotor azimuth for the sum of all distance sensors is minimized is superposed to the rotor azimuth signal.

Given the baseline of an inductive sensor d1 with a high reliability in the rotorazimuthal mounting position the baseline d2 (dashed) is assumed to record the same shape of the same tracking target (rotorflange surface) but with a lead or lag angle delta $\Psi$ to the reference. delta $\Psi$ can be determined by finding the angle which minimizes the sum of the differences between both baselines.

It should be noted that the term "comprising" does not exclude other elements or steps and "a" or "an" does not exclude a plurality. Also, elements described in association with different embodiments may be combined. It should also be noted that reference signs in the claims should not be construed as limiting the scope of the claims.

**Claims**

1. A method of determining a tilt bending moment (Mtilt) and a yaw bending moment (Myaw) at a shaft (10) of a wind turbine (1), wherein the shaft (10) comprises a radially extended surface (13), and at least three distance sensors (12i), at different azimuthal positions ($\psi_i$), arranged to face the flange surface (13) for measuring a distance (di) to the flange surface (13), wherein the method comprises:

   determining a baseline distance profile (14) for each distance sensor (12i) as a function of the rotor azimuth ($\psi$)

by using the distance sensors (12i) when the wind turbine (1) is operated at an idling condition without power production, preferably with blades (6) of the wind turbine (1) being pitched to a feather position;

operating the wind turbine (1) and determining a distance between the baseline profile (14) and an actual distance (di) measured by the distance sensor (12i) for a given azimuth ($\Psi$) of the flange surface (13); and

determining the tilt bending moment (Mtilt) and the yaw bending moment (Myaw) as function of the determined distance between the baseline profile (14) and the actual distance (di) at the azimuth ($\Psi$) of the flange surface (13).

**2.** The method according to the preceding claim, wherein the step of determining the tilt bending moment Mtilt and the yaw bending moment Myaw comprises two sub-steps:

solving a system of equations to get an axial distance ux and rotation angles in two different directions Ry and Rz by minimizing the following weighted error function with respect to ux, Ry and Rz at every time step:

$$error = \sum_{i=1}^{n} \left( \frac{-(d_i - d_{bi}(\psi)) - u_x + R_z y_i - R_y z_i}{s_i(\psi)} \right)$$

wherein:

n is the number of distance sensors (12i);

$d_i$ is the distance measured by the distance sensor (12i);

$d_{bi}(\Psi)$ is the baseline profile (14) of the sensor (12i) for a specific rotor azimuth $\Psi$;

$u_x$, $R_z$ and $R_y$ are the axial distance and the rotation angles in two different directions; and

$y_i$ and $z_i$ are coordinates of the position of the distance sensor (12i) relative to a rotation axis (8);

$s_i(\psi)$ is a baseline standard deviation for a specific rotor azimuth $\Psi$; and

converting the axial distance ux and the rotation angles Ry and Rz to the tilt bending moment Mtilt and the yaw bending moment Myaw by using functions f1 and f2, being

```
Mtilt = f₁(Ry,Rz,ux) and Myaw = f₂(Ry,Rz,ux).
```

**3.** The method according to the preceding claim, further comprising:

including known values of a rotor thrust Fx, a rotor torque Mx, a lateral rotor force Fy and a vertical rotor forces Fz in refined functions f3 and f4 of f1 and f2, respectively, so that

```
Mtilt = f₃(Ry,Rz,ux,Mx,Fx,Fy,Fz),
```

and

```
Myaw = f₄(Ry,Rz,ux,Mx,Fx,Fy,Fz).
```

**4.** The method according to any one of claims 2 and 3, wherein functions $f_i$ in the simplest form are a linear combination of input variables, i.e.:

```
f₁ = K₁₀+K₁₁*Ry+K₁₂*Rz+K₁₃*Ux
```

```
f₂ = K₂₀+K₂₁*Ry+K₂₂*Rz+K₂₃*Ux
```

```
f₃ = K₃₀+K₃₁*Ry+K₃₂*Rz+K₃₃*Ux+k₃₄*Mx+K₃₅*Fx+K₃₆*Fy+K₃₇*Fz
```

```
f₄ = K₄₀+K₄₁*Ry+K₄₂*Rz+K₄₃*Ux+k₄₄*Mx+K₄₅*Fx+K₄₆*Fy+K₄₇*Fz
```

wherein $K_{ij}$ are constants.

5. The method according to any one of the preceding claims, wherein
the radially extended surface (13) can be constituted by a rotor lock device or any other radially extended surface such as a flange, preferably with continuity along an entire circumference of the rotor shaft (10).

6. The method according to any one of the preceding claims, wherein:
a convergence criterion, based on a standard deviation of a mean value of the measured distance for a specific rotor azimuth ($\Psi$), is required to decide when the determination of the baseline distance profile (14) is completed.

7. The method according to any one of the preceding claims, wherein:
a procedure to check a layout of the distance sensors (12i) is performed by a comparison of the baseline distance profile (14) of each distance sensor (12i) versus a selected baseline distance profile of reference.

8. The method according to any one of the preceding claims, wherein:
a procedure to correct an input signal for the rotor azimuth ($\Psi$) by comparing a pattern of a most recent elapsed timeseries of the distance sensor (12i) of a given period of time to the pattern of the baseline profile (14) at an uncorrected rotor azimuth ($\Psi$) is applied, and an increment ($d\Psi$), at which the absolute error to the baseline profiles (14) over the angular range of rotor azimuth for the sum of all distance sensors (12i) is minimized, is superposed to the rotor azimuth signal.

9. A device for determining a tilt bending moment (Mtilt) and a yaw bending moment (Myaw) at a shaft (10) of a wind turbine (1), wherein the shaft (10) comprises a radially extended surface (13), and at least three distance sensors (12i), at different azimuthal positions ($\psi_i$), arranged to face the flange surface (13) for measuring a distance (di) to the flange surface (13), wherein the device comprises:

a first determining unit configured to determine a baseline distance profile (14) for each distance sensor (12i) as a function of the rotor azimuth ($\psi$) by using the distance sensors (12i) when the wind turbine (1) is operated at an idling condition without power production, preferably with blades (6) of the wind turbine (1) being pitched to a feather position;
an operating unit configured to operate the wind turbine (1) and to determine a distance between the baseline profile (14) and an actual distance (di) measured by the distance sensor (12i) for a given azimuth ($\Psi$) of the flange surface (13); and
a second determining unit configured to determine the tilt bending moment (Mtilt) and the yaw bending moment (Myaw) as function of the determined distance between the baseline profile (14) and the actual distance (di) at the azimuth ($\Psi$) of the flange surface (13).

# FIG 1

FIG 2

11

13

10

FIG 3

FIG 4

FIG 5

FIG 6

Europäisches Patentamt
European Patent Office
Office européen des brevets

# EUROPEAN SEARCH REPORT

Application Number

EP 21 38 3201

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/151577 A1 (PIERCE KIRK [US] ET AL) 5 August 2004 (2004-08-05) | 1,5-9 | INV. F03D17/00 |
| A | * paragraph [0017] - paragraph [0019]; figures 5a-5c, 9 * <br> * paragraph [0024] - paragraph [0027] * <br> * paragraph [0040] - paragraph [0043] * | 2-4 | |
| X | EP 2 402 717 B1 (GEN ELECTRIC [US]) 10 August 2016 (2016-08-10) * paragraph [0013]; figures 2-4 * | 1,5-9 | |
| X | US 2012/055247 A1 (GONZALEZ CASTRO JORGE [DE]) 8 March 2012 (2012-03-08) * paragraph [0043] - paragraph [0045]; figures 1-4 * | 1,5-9 | |
| X | US 2006/140761 A1 (LEMIEUX DAVID L [US]) 29 June 2006 (2006-06-29) * paragraph [0014] * <br> * paragraph [0026] * <br> * paragraph [0041] - paragraph [0042]; figures 1-5 * | 1,5-9 | TECHNICAL FIELDS SEARCHED (IPC) <br><br> F03D <br> G01M |

The present search report has been drawn up for all claims

| Place of search | Date of completion of the search | Examiner |
|---|---|---|
| The Hague | 30 May 2022 | Herdemann, Claire |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................
& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 21 38 3201

This annex lists the patent family members relating to the patent documents cited in the above-mentioned European search report.
The members are as contained in the European Patent Office EDP file on
The European Patent Office is in no way liable for these particulars which are merely given for the purpose of information.

30-05-2022

| Patent document cited in search report | | Publication date | Patent family member(s) | | Publication date |
|---|---|---|---|---|---|
| US 2004151577 | A1 | 05-08-2004 | NONE | | |
| EP 2402717 | B1 | 10-08-2016 | CN | 102312779 A | 11-01-2012 |
| | | | DK | 2402717 T3 | 19-09-2016 |
| | | | EP | 2402717 A1 | 04-01-2012 |
| | | | US | 2011140422 A1 | 16-06-2011 |
| US 2012055247 | A1 | 08-03-2012 | CN | 102954858 A | 06-03-2013 |
| | | | EP | 2559897 A2 | 20-02-2013 |
| | | | US | 2012055247 A1 | 08-03-2012 |
| US 2006140761 | A1 | 29-06-2006 | DK | 1674724 T3 | 12-05-2014 |
| | | | EP | 1674724 A2 | 28-06-2006 |
| | | | ES | 2461856 T3 | 21-05-2014 |
| | | | US | 2006140761 A1 | 29-06-2006 |

EPO FORM P0459

For more details about this annex : see Official Journal of the European Patent Office, No. 12/82